# EUROPEAN PATENT SPECIFICATION

(11) **EP 0 785 869 B1**
(45) Date of publication and mention of the grant of the patent: **25.08.1999**
(21) Application number: 95919852.4
(22) Date of filing: 15.05.1995
(51) Int. Cl.: B32B 27/12, B32B 31/00, B29C 61/06, B65D 81/03

(54) **WRAP MATERIAL AND METHOD FOR PROTECTING ARTICLES**
MATERIAL SOWIE VERFAHREN ZUM SCHUTZ VON GEGENSTÄNDEN
MATERIAU D'EMBALLAGE ET PROCEDE POUR PROTEGER DES ARTICLES

(30) Priority: 14.10.1994 US 324105; 27.01.1995 US 379867
(43) Date of publication of application: 30.07.1997
(60) Divisional application: 99101231.1
(73) Proprietor: Transhield AS, 0581 Oslo (NO)
(72) Inventor: TODT, Gregory, L., Elkhart, IN 46516 (US)
(74) Representative: Pratt, David Martin
(86) International application number: US9506131
(87) International publication number: WO9611804

(56) References cited:
- EP-A- 0 604 731
- DE-A- 2 063 961
- DE-A- 3 817 210
- GB-A- 2 087 309
- US-A- 3 622 434
- US-A- 3 755 062
- US-A- 3 775 236
- DATABASE WPI Section Ch, Week 7733, Derwent Publications Ltd., London, GB; Class A92, AN 77-58653Y & JP,B,52 027 595 ( MITSUBISHI RAYON KK) 21 July 1977

## Description

This invention relates to a shrink wrap material and a method for protecting articles by wrapping them in the shrink wrap material.

Large articles, such as automobiles, vans, machinery and boats often must be transported from the factory to the customer on open trucks where they are exposed to the elements. Customers expect that new vehicles, machinery, and other large articles to be in pristine condition when they are delivered, and will not tolerate flaws, even if such flaws are no fault of the manufacturer and have occurred after the article has been shipped from the factory. Damage may be caused by any number of factors. For example, acid rain is an increasingly common phenomena, and, if the acid rain is of sufficient concentration, damaged paint may occur. Furthermore, open transport of such articles subjects the articles to damage due to small rocks and stones which may be hurled against the article during transportation. One way to protect even large articles from the environment is through shrink wrapping, which is most commonly employed on very small household articles. A method of shrink wrapping automotive vehicles is disclosed in U.S. Patent 3,653,497.

However, it is difficult to shrink wrap large articles, such as vehicles, machinery or boats. When the shrink wrap film is heated during shrinking, it becomes very vulnerable. Accordingly, holes are often pulled in the shrink wrap film as the latter is applied over the vehicle or other large object. Furthermore, the shrink wrap film itself is abrasive and can damage paint when the shrink wrap film is applied to an article.

The shrink wrap material of the present invention includes a shrink/stretch film as the outer layer, and an inner layer composed of a non-woven fabric consisting of randomly arranged, non-woven fibers which cooperate to define voids. Accordingly, the inner layer is a soft fabric, which acts as a cushion that supports the shrink/stretch film away from the paint. When the shrink/stretch film is shrunk around the article, the non-woven layer aerates to form bubbles, thus further softening the non-woven fabric. The aeration is due to the differential shrink response between the shrink wrap and the non-woven fabric, and is also a result of heating the shrink film to cause shrinkage, which also causes the air entrained within the non-woven fabric to expand, thus causing formation of bubbles to further soften the material. Because of the cushioning effect of the non-woven fabric, the stretch of the shrink film is limited to a comparatively small area, thus substantially reducing the chance that the shrink film will rupture as it is applied. After the material is shrunk around the article, the material retains its elasticity, again due to the cushioning effect of the non-woven inner layer, so that the material resists rupture if it is struck by hurled objects, such as rocks and stones. Accordingly, an important advantage of the present invention is that an improved shrink wrap material protects large objects during the shrink wrapping process itself and also resists environmental contaminants and hurled objects after the material is shrunk around the article.

According to a specific embodiment of the present invention, the material is made into a tape by applying an adhesive to the surface of the material that engages the article to be wrapped. The adhesive may either be a pressure sensitive or a heat responsive adhesive of any type well known to those skilled in the art. Accordingly, the material is applied only to some of the surfaces, such as the horizontal surfaces of a motor vehicle, instead of completely enveloping the article to be protected. Since the horizontal or substantially horizontal surfaces are those surfaces most likely to be affected by acid rain, the tape wrap material can be used to protect that portion of the vehicle most susceptible to damage at a substantially reduced cost over that required to completely envelop the motor vehicle. The tape material can then be applied to the surfaces of the motor vehicle for which protection is most important. Heat can be applied to the material, thereby shrinking the shrink/stretch film and causing the non-woven fabric inner layer to "bubble up" and soften as discussed above, thereby providing further protection of the motor vehicle. If the adhesive used is a heat responsive adhesive, the heat applied to shrink the shrink/stretch film also activates the adhesive, thereby causing the latter to adhere to the surfaces being protected. The material can then be peeled off the surfaces without damaging the surfaces. The non-woven layer acts as a buffer between the shrink/stretch film and the surfaces of the article, protecting the surfaces from the abrasive plastic of the film. Accordingly, the plastic tape or film does not come in direct contact with the surfaces being protected, so that the surfaces are protected from scratching due to the application of the film itself.

Advantages of the present invention will become apparent from the following description with reference to the accompanying drawings, in which:
Fig. 1 is schematic illustration of the manner in which the shrink wrapping material according to one embodiment of the present invention is manufactured;
Fig. 2 is a cross sectional view taken through the shrink wrapping material according to the present invention before the material is shrunk; Fig. 3 is a cross sectional view similar to Fig. 2 but illustrating the shrink wrapping material according to the present invention after it is shrunk;
Fig. 4 is a cross sectional view illustrative of the manner in which the shrink wrapping material illustrated in Fig. 2 is rolled together with the non-woven fabric sides of the material facing one another, so that the material can be formed into a bag fitting around an article to be protected;
Fig. 5 is a perspective view of a military missile which is wrapped using the shrink wrapping material made according to the present invention;
Fig. 6 is a perspective view of a bale of hay which is wrapped using the material according to the present invention;
Fig. 7 is a perspective view of an automotive vehicle which is to be protected by the wrap material according to the present invention; the vehicle is illustrated after the material is placed on the vehicle but before shrinking;
Fig. 8 is a perspective view of a motorcycle protected by the shrink wrap material made pursuant to the present invention;
Fig. 9 is a schematic illustration similar to Fig. 1 but illustrating how the shrink wrapping material according to an alternate embodiment of the present invention is manufactured;
Fig. 10 is an illustration of an automotive vehicle in which the tape product manufactured as illustrated schematically in Fig. 9 is applied to the automotive vehicle; and
Fig. 11 is a schematic illustration of one matter of applying the material manufactured by the process illustrated schematically in Fig. 9 to the automotive vehicle illustrated in Fig. 10.

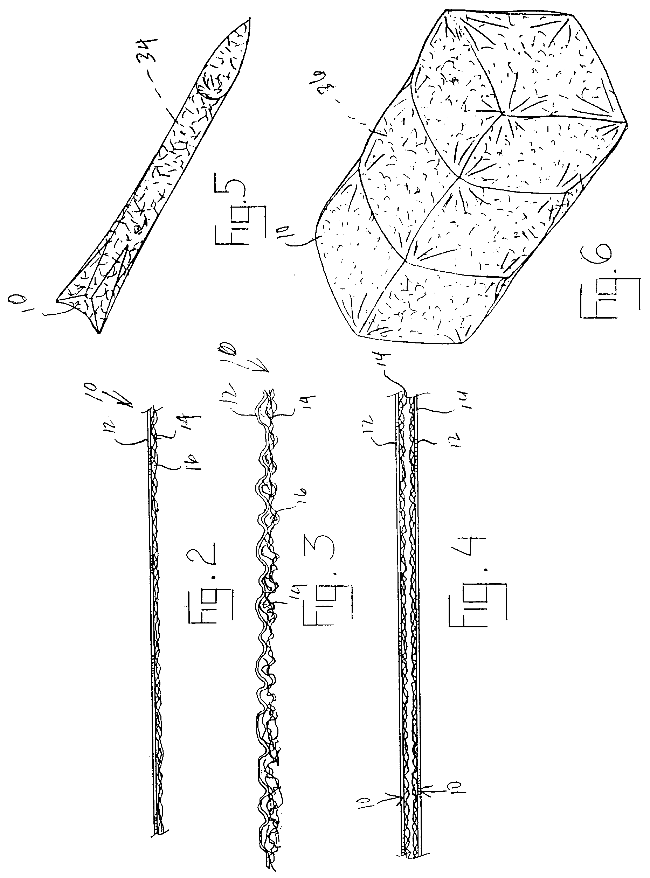

Referring now to Figures 2-3 of the drawings, a shrink wrap material generally indicated by the numeral 10 made according to the present invention includes a layer 12 consisting of a shrink/stretch film which has a predetermined shrink response in response to heat applied to the film and a second layer 14 which is secured to the layer 12 as will be hereinafter described. The second layer 14 is a non-woven fabric comprising non-woven, randomly arranged fibers. The first layer 12 may be of any known type of shrink/stretch films well known to those skilled in the art, but is preferably a polyolafin in the ethylene vinyl acetate copolymer family. However, other shrink wrap films may be used. The non-woven fabric 14 may be of any well known type, and may include both natural and man-made fibers, or combinations thereof, such as polyester, nylon 6, 6 or a combination of wood pulp and polyester fibers. Typical fabrics are sold by the Dupont Corporation under the trademark Sontara® or by Fabreweb North America, Inc., identified as fabric PBN-2. The non-woven fabric may be spun bonded. It will be noted that the fibers forming the non-woven fabric 14 cooperate to define voids 16. Accordingly, the upper and lower surfaces of the non-woven fabric 14 are irregular. As will hereinafter be explained, an adhesive is applied to the surface of the fabric 14 that will be bonded to the film 12. Accordingly, the adhesive is applied only to the raised portions of the fabric 14, and does not wet through the bat. Accordingly, the non-woven fabric 14 is not continuously bonded to the film 12, but only the raised portions of the fabric 14 are bonded to the film 12, thus creating discontinuities in the bond, such that only a relatively small percentage of the surface area of the fabric 14 is secured to the shrink film 12. This permits the non-woven fabric 14 to aerate during the shrinking process, thus permitting the non-woven fabric 14 to act as a cushion between the shrink film 12 and the article being wrapped. The aeration of the non-woven fabric 14 is due to the fact that the heat applied to shrink the material 10 around the article being wrapped causes air entrained in the voids 16 to expand, thus substantially increasing the size of the voids. Formation of the larger voids or bubbles is also due to the fact that the fabric 14 has a different shrink response than does the shrink film 12. Although the film 12 shrinks in response to heat applied thereto, the non-woven fabric 14 may either remain about the same size or increase in size to expand the voids in response to the applied heat. Since heat applied to shrink the film 12 may approach 400°F during the shrinking process, it is important that the material from which the non-woven fabric 14 is manufactured be able to withstand such temperatures.

It is also important that the fibers comprising the non-woven fabric 14 be able to reflect and/or absorb the majority of the heat. Accordingly, the article being wrapped is protected from the heat applied to shrink the material 10. Less heat is required to shrink the material 10, since the fibers of the fabric 14 reflect heat back into the shrink film 12, thus reducing the amount of heat that must be applied to the shrink film 12 in order to effect shrinkage. Since, as will be discussed later herein, it is desirable to apply chemicals to the non-woven fabric 14 to thereby either control the environment of the article being wrapped or to treat the article being wrapped, it is important that the fibers from which the fabric 14 is formed are both highly chemical resistant and inert.

The adhesive applied to the non-woven fabric 14 is preferably a rubber thermoplastic hot melt adhesive in the "block copolymer" family. Any one of several compounds well known to those skilled in the art may be used with equal effectiveness. It is important that the adhesive be of a consistency that does not wet through the fabric 14, yet can be easily applied to the raised portions of the surface of the fabric 14 which is bonded to the shrink film 12. Because the adhesive is a hot melt, it is tacky when applied to the fabric so that a good stick is obtained when the fabric 14 and the film 12 are merely touched together, and no pressure need be applied to obtain bonding. Pressure would compress the non-woven fabric 14, which is obviously undesirable.

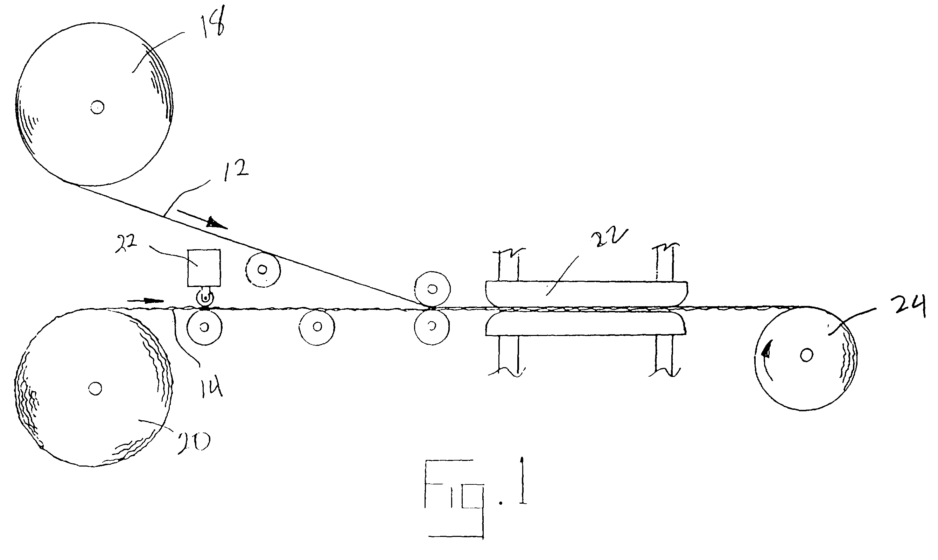

Referring now to Fig. 1, the film 12 is fed from a roll 18 and the non-woven fabric 14 is fed from a roll 20. Fabric 14 is fed through a gluing station 22 where the hot melt adhesive is applied lightly to the upper surface of the fabric 14 as it is fed toward the bonding station 22. Bonding station 22 gradually reduces the distance between the fabric 14 and the film 12 as these materials are carried through the bonding station 22. The bonding station 22 is adjusted such that the film 12 is brought into touching engagement with the fabric 14 without substantial pressure being applied to either the film 12 or the fabric 14. As described above, since the adhesive using a hot melt adhesive and is very tacky, this touching of the film 12 against the non-woven fabric 14 is all that is required to secure the film to the fabric, it being noted that the bonding will only take place across a relatively small percentage of the fabric 14 and film 12, since the adhesive is applied only to the raised portions of the fabric 14 and does not wet through the fabric 14. After passing through the station 22, the material is wound on a roll 24.

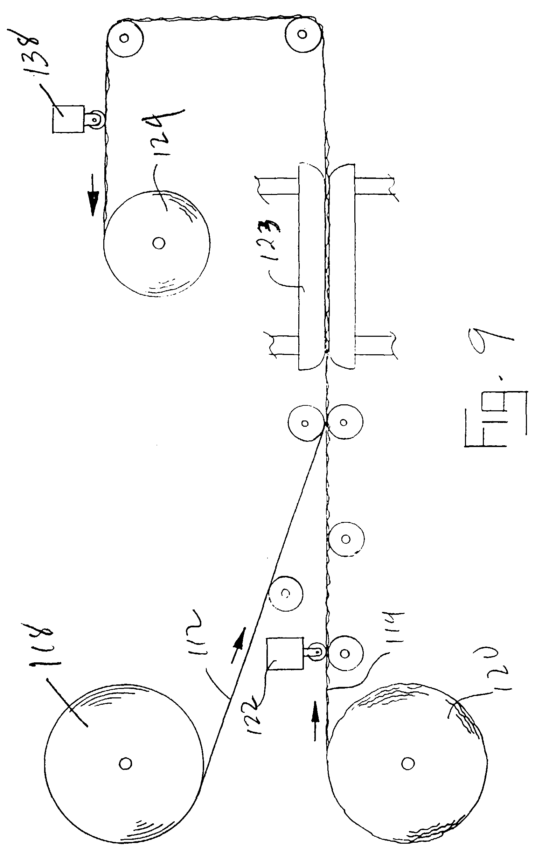

Referring to Fig. 4, the shrink wrapping material 10 from two rolls 24 are unwound from the rolls 24 and then rewound on another roll, with the non-woven fabric 14 of the layers wound facing one another as indicated in Fig. 4. Accordingly, a section comprising two layers of the material 10, with the fabric layers 14 facing one another, may be unwound from the roll, an appropriate amount cut off, and the edges are sealed to form a bag in which the non-woven fabric 14 is on the inside of the bag and the shrink film 12 is on the outside of the bag. As illustrated in Fig. 7, the bag 26 of the material thus formed is placed over an automotive vehicle 28 which is to be wrapped by the material 10. Heat is then applied to the bag 26 to shrink the bag around the vehicle 28. Heat may be applied either through a conventional heating tunnel, in the case of high volume production, or by the use of hand held blowers, in which one or more workmen with a blower walk around the van 28 to apply heat to the bag 26, thereby causing the latter to shrink into contact with the van 28.

As discussed above, as the bag is heated, the non-woven layer 14, which forms the inside of the bag 26, aerates to form bubbles, thus expanding the non-woven fabric 14 so that it softens and acts as a cushion, maintaining the film 12 away from the article being wrapped. Since the fabric 14 is extremely soft, it will not damage paint, and the cushioning provided by the fabric causes the material 10 to resist puncture by hurled objects such as stones or rocks during transport of the vehicle 28 to the consumer. Furthermore, during the shrinking process, the film 12 is extremely vulnerable to rupture, since the heat applied during shrinkage weakens the film. Accordingly, it is difficult to apply prior art materials to large objects since the stretching force applied to the film may be transmitted over a large area and may rupture the film. However, the cushioning provided by the non-woven fabric 14 of material 10 limits application of the stretching forces during shrinkage to a relatively small area, thus reducing the chance that the shrink film 12 will rupture.

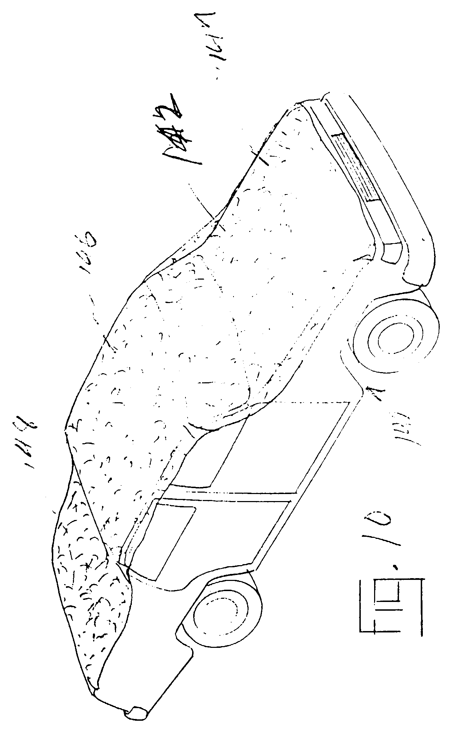

Referring now to Fig. 8, other articles, such as a motorcycle 30, may also be wrapped using the material and method of the present invention. When motorcycle 30 is wrapped, the bag 32 is cut to size to fit over the motorcycle 30, and then shrunk into engagement with the motorcycle 30, thus providing protection for the motorcycle 30 during transport. As described above, any other article which is subject to damage during transport, particularly large articles, may be wrapped using the material and process of the present invention. In addition to automotive vehicles and motorcycles, lawn and garden equipment, boats and large machinery may also be wrapped.

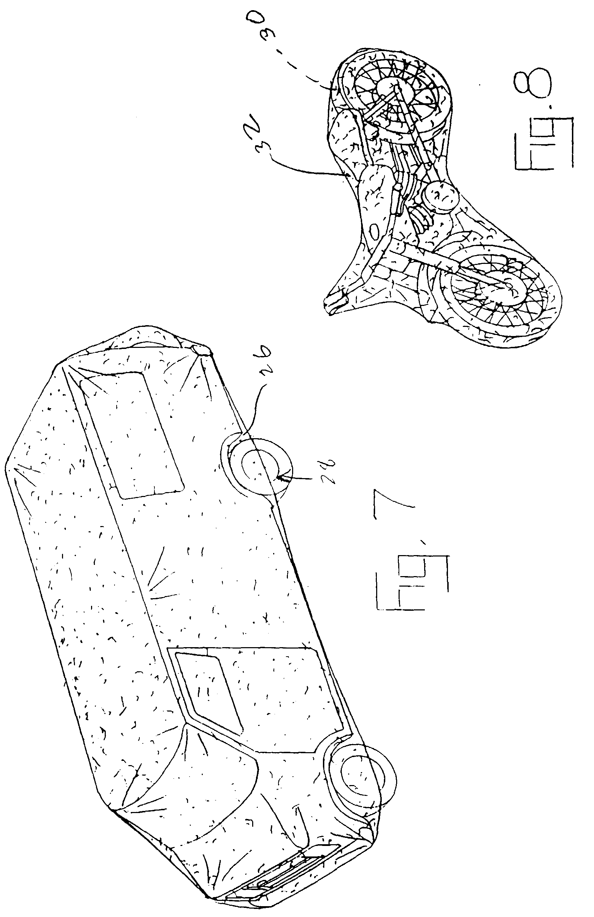

Referring to Fig. 5, a military product, such as a missile 34, is illustrated wrapped by the material 10. Obviously, the performance of military products, such as the missile 34, may be affected if damage to the paint occurs, since even small defects in the paint may cause the flight path of the missile 34 to be changed. Furthermore, it is important to safeguard military products from tampering and sabotage, and to be able to know if such tampering or sabotage has occurred. Accordingly, the non-woven fabric 14 of the shrink wrap material 10 used to wrap the military product 34 is treated with a known air activated color change material. Accordingly, if the film 12 is punctured, the color change material will be activated, thereby immediately notifying of a punctured outer layer, so that tampering of the military missile 34 will be indicated. Other chemical additives may be used to treat the fabric 14, such as chemicals to control the humidity within the envelope formed by the material 10, UV stabilizers to prevent sunlight damage to products wrapped by the material, and acid or acid neutralizers, to control the acidity of the environment.

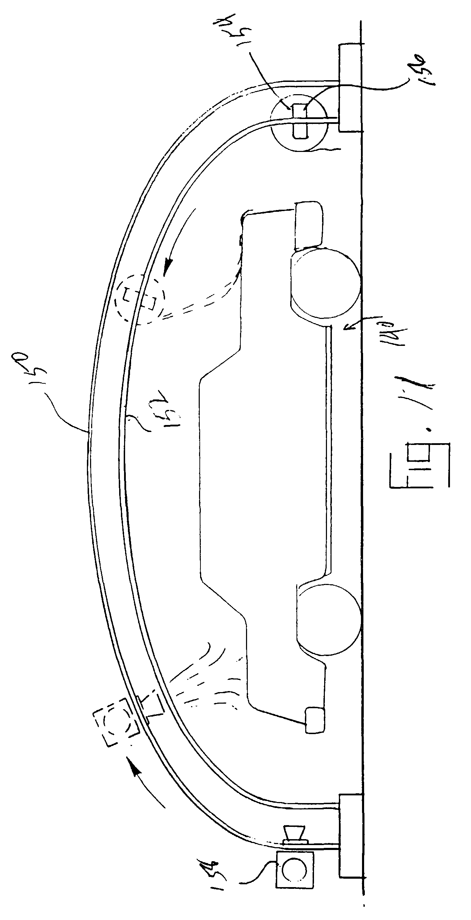

Referring to Fig. 10, an agricultural product, such as a bale of hay 36, may also be wrapped by the material 10. Most agriculture products, such as hay, degrade quickly, generally must be used near where the product is produced, and generally cannot be exported. Accordingly, by wrapping the bale of hay 36 with the material 10, the environment can be controlled to maintain freshness of the product. For example, anti-fungal agents may be added to the material 14 and other additives may be added to control the humidity to which the product 36 is maintained. Of course, the outer layer 12 can be made air permeable by punching holes in the material, if such is desired.

Accordingly, the shrink wrapping material 10 may be used to wrap a large variety of both large and small articles. The shrink wrap material 10 not only protects the article being wrapped from the abrasive effect of the outer film 12 as the article is being wrapped, but also protects the article from environmental conditions, such as rain, mud or hurled objects. Both large and small articles may be wrapped with the material and then transported without damage to the article. Furthermore, the inner layer may be treated to control the environment in which the wrapped article is maintained, and also may be treated with material that will indicate tampering.

Referring now to Fig. 9, another form of the invention is disclosed in which film 112 is bonded to a non-woven fabric 114 at a bonding station 123, an appropriate bonding agent such as an adhesive being applied to the non-woven 114 by adhesive dispenser 122. After passing through the bonding station 123, the side of the non-woven material 114 opposite to that treated by the adhesive dispenser 122 is treated with an adhesive dispensed from another adhesive dispenser 138. The adhesive dispensed by dispenser 138 may be a pressure sensitive adhesive, which adheres to an article when pressure is applied to the wrap material, or may be a heat activated, hot melt adhesive, which responds to heat to bond to an article which material 124 is applied. If a pressure responsive adhesive is used, the film 112 acts as the release layer separating the layers of the non-woven treated by the adhesive 138. Accordingly, a tape is formed in which one surface of the wrap material 124 has an adhesive applied to it.

Referring to Fig. 10, an automotive vehicle 140 is protected by a section 142 of the tape material manufactured as illustrated in Fig. 9. Section 142 is applied to the horizontal surfaces such as the hood 144, the roof 146 and the trunk 148. These substantially horizontal surfaces are the surfaces most likely to be damaged by, for example, acid rain. If a pressure sensitive adhesive has been used on the non-woven layer, the section 142 of the wrap material is placed as indicated in Fig. 10, and then pressed against the surfaces. Accordingly, the wrap material adheres to these surfaces, protecting them from the aforementioned environmental contaminants. The adhesive is such that the section 142 of wrap material may be peeled off of the surfaces of the vehicle when the vehicle is delivered to the dealer and before delivery to the ultimate consumer. The film is supported off of the surfaces 144, 146 and 148 by the non-woven fabric. Accordingly, the abrasive plastic of which the film 112 is made does not contact the surfaces 144, 146 and 148 so that the surfaces are not scratched by the plastic film. Prior art techniques for protecting vehicles involved tapes in which a plastic film was coated with adhesive and applied directly to the surfaces to be protected. These materials had the difficulty in that the plastic film itself was abrasive and sometimes scratched the surfaces. With the non-woven intermediate layer, the surfaces are protected by the softness of the non-woven material, which supports the plastic film off of the surface.

Referring to Fig. 10, if the section 142 of wrap material it includes a shrink/stretch outer film and non-woven inner layer as described above, the section 142 is laid over the surfaces 144, 146, 148, and then heat is applied to the section 142. Accordingly, the non-woven layer "bubbles up" as discussed above, thereby increasing the loft of the non-woven material and softening it, thereby providing additional protection to the surfaces protected by the wrap material. Furthermore, the applied heat to shrink the outer film and bubble up the non-woven layer also activates the adhesive, causing the latter to adhere to the surfaces 144, 146 and 148.

Referring now to Fig. 11, one method of applying wrap material to the vehicle 140 is illustrated. A first set of laterally spaced rails, only of which is illustrated at 150, and a second set of laterally spaced rails 152 are provided such that the vehicle 140 can be driven between the set of rails. A roll 154 of the tape wrapping material described above is mounted on a carriage 156 which can traverse along the rails 152. A heating device 158 is mounted on the rails 150 and can traverse along the rails as illustrated in Fig. 11. The vehicle 140 is driven between the sets of rails, and the carriage 156 is activated to traverse over the vehicle 140. As the carriage is moved, the wrap material 154 is unrolled as illustrated by the dotted lines in Fig. 11, and after the carriage reaches the end of the vehicle, the wrap material is severed, thereby providing a section 142 of wrap material as illustrated in Fig. 10. The carriage 154 with the roll mounted thereon is returned to the solid position illustrated in Fig. 11. The heater 158 is then actuated and traverses along the rails 150, applying heat to the wrap material to shrink the shrink/stretch film and to also activate the adhesive as described above. After the heater 158 reaches the front of the vehicle, it is returned to its solid line position in Fig. 11, and the vehicle 140 is driven away. If necessary, a portion of the wrap material can be cut away from the windshield to permit the driver to drive the vehicle while the wrap material remains in place.

## Claims

1. A wrap material for protecting an article, the wrap material comprising a first layer (12) and a second layer (14), one side of the second layer being bonded to the first layer by an adhesive, the second layer being a non-woven fabric, the second layer being intended to engage the article to separate the first layer from the article to provide a cushion between the article and the first layer, said one side of the non-woven fabric having an irregular surface defined by raised and lowered portions, characterised in that the first layer is a shrinkable and stretchable film and the adhesive is applied to the raised portions to form intermittent bonds between the second and first layers.

2. A wrap material as claimed in claim 1, further characterised in that the second layer (14) includes randomly-arranged fibres forming said non-woven fabric.

3. A wrap material as claimed in claim 2, further characterised in that at least some of said fibres are heat-reflective to protect the article from the heat applied to the first layer (12), and to assist in shrinking the first layer by reflecting heat back into the first layer.

4. A wrap material as claimed in any one of claims 1 to 3, further characterised in that a pressure-responsive adhesive is applied to the other side of the non-woven fabric (14), whereby the non-woven fabric adheres to the article upon pressing of the wrap material against the article after the wrap material has been placed around the article with the non-woven fabric against the article.

5. A wrap material as claimed in any one of claims 1 to 3, further characterised in that a hot melt adhesive is applied to the other side of the non-woven fabric (14), the hot melt adhesive being activated upon application of heat to the wrap material, whereby the non-woven fabric adheres to the article upon application of heat to the wrap material after the wrap material has been placed around the article with the non-woven fabric against the article.

6. A wrap material as claimed in any one of the preceding claims, further characterised in that the first layer is a shrink/stretch film (12) which shrinks in response to heat applied thereto.

7. A wrap material as claimed in claim 5, further characterised in that the adhesive applied to the other side of the non-woven fabric (14) is a heat-activated adhesive which is activated at about the same temperature required to shrink the film (12).

8. A method of protecting an article against surface damage, the method comprising the steps of providing a wrap material consisting of a first layer (12) and a second layer (14) of fibres arranged into a non-woven fabric, arranging the wrap material around the article such that the wrap material covers the article with the second layer against the article and the first layer away from the article, characterised in that the first layer is a shrinkable and stretchable film, and said second layer is intermittently bonded to the first layer.

9. A method as claimed in claim 8, further comprising the step of applying heat to the wrap material sufficient to shrink the first layer (12) to an extent that the second layer (14) engages the article and supports the first layer away from the article.

10. A method as claimed in claim 8 or claim 9, further comprising the step of applying sufficient heat to the wrap material to cause the second layer (14) to aerate to form bubbles in the second layer.

11. A method as claimed in claim 8 or claim 9, further characterised in that one side of the non-woven fabric (14) defines an irregular surface defined by said fibres having raised and lowered portions, and the method further comprising the step of securing said irregular surface to the first layer (12) by applying adhesive to said raised portions.

12. A method as claimed in any one of claims 8 to 11, further comprising the step of adding chemical treatment material to the non-woven fabric (14) to control the environment in which the article is stored.

13. A method as claimed in any one of claims 8 to 11, further comprising the step of applying an air activated colour change chemical to the non-woven fabric (14), whereby puncture of the first layer (12) is indicated by a colour change of the second layer (14).

14. A method of manufacturing material for shrink wrapping articles, the method comprising the steps of providing a quantity of a shrink/stretch film (12), providing a quantity of a non-woven fabric (14) of randomly arranged fibres defining voids, and securing the fabric to the film without substantially compressing the fabric, the fabric (14) including an irregular surface engaging the film, the irregular surface being defined by raised and lowered portions, and the method further comprising the step of applying an adhesive to the raised portions without wetting the fabric with the adhesive.

15. A method as claimed in claim 14, further comprising the step of bringing the raised portions of the fabric (14) into engagement with the film (12) without pressing the film and the fabric together.

16. A method as claimed in claim 15, further comprising the steps of placing the fabric side of one layer of the material against the fabric side of an adjacent layer of the material, and then sealing around a predetermined perimeter of the material to form a bag having the fabric (14) on the inside of the bag and the film (12) on the outside of the bag.

## Patentansprüche

1. Umhüllungsmaterial zum Schutz eines Gegenstandes, wobei das Umhüllungsmaterial eine erste Schicht (12) und eine zweite Schicht (14) aufweist, eine Seite der zweiten Schicht mit einem Klebstoff an die erste Schicht gebunden ist, die zweite Schicht eine ungewebte Textilie ist, die zweite Schicht mit dem Gegenstand so in Verbindung stehen soll, daß die erste Schicht von dem Gegenstand getrennt ist, so daß sich ein Polster zwischen dem Gegenstand und der ersten Schicht ergibt, die eine Seite der ungewebten Textilie eine durch erhabene und abgesenkte Teile definierte unregelmäßige Oberfläche hat, dadurch gekennzeichnet, daß die erste Schicht eine schrumpfbare und streckbare Folie ist und der Klebstoff zur Bildung von unterbrochenen Verbindungen zwischen der zweiten und der ersten Schicht auf die erhabenen Teile aufgebracht ist.

2. Umhüllungsmaterial nach Anspruch 1, das außerdem dadurch gekennzeichnet ist, daß die zweite Schicht (14) die ungewebte Textilie bildende, zufällig angeordnete Fasern aufweist.

3. Umhüllungsmaterial nach Anspruch 2, das außerdem dadurch gekennzeichnet ist, daß zumindest einige der Fasern zum Schutz des Gegenstandes vor der auf die erste Schicht (12) angewendeten Wärme wärmereflektierend sind und das Schrumpfen der ersten Schicht unterstützen, indem die Wärme zurück in die erste Schicht reflektiert wird.

4. Umhüllungsmaterial nach einem der Ansprüche 1 bis 3, das außerdem dadurch gekennzeichnet ist, daß ein Kontaktklebstoff auf die andere Seite der ungewebten Textilie (14) aufgebracht ist, wodurch nach dem Umhüllen des Gegenstandes mit dem Umhüllungsmaterial mit der ungewebten Textilie zum Gegenstand hin, die ungewebte Textile durch Drücken des Umhüllungsmaterials an den Gegenstand an dem Gegenstand haftet.

5. Umhüllungsmaterial nach einem der Ansprüche 1 bis 3, das außerdem dadurch gekennzeichnet ist, daß ein Schmelzklebstoff auf die andere Seite der ungewebten Textilie (14) aufgebracht ist, der Schmelzklebstoff durch Anwendung von Wärme auf das Umhüllungsmaterial aktiviert wird, wodurch nach dem Umhüllen des Gegenstandes mit dem Umhüllungsmaterial mit der ungewebten Textilie zum Gegenstand hin, die ungewebte Textilie durch Anwendung von Wärme auf das Umhüllungsmaterial an dem Gegenstand haftet.

6. Umhüllungsmaterial nach einem der vorhergehenden Ansprüche, das außerdem dadurch gekennzeichnet ist, daß die erste Schicht eine Schrumpf/Streckfolie (12) ist, die durch die darauf angewendete Wärme schrumpft.

7. Umhüllungsmaterial nach Anspruch 5, das außerdem dadurch gekennzeichnet ist, daß der auf die andere Seite der ungewebten Textilie (14) aufgebrachte Klebstoff ein wärmeaktivierter Klebstoff ist, der bei etwa der gleichen Temperatur, die zum Schrumpfen der Folie (12) erforderlich ist, aktiviert wird.

8. Verfahren zum Schützen eines Gegenstandes gegen Oberflächenbeschädigung, bei dem ein aus einer ersten Schicht (12) und einer zweiten Schicht (14) aus Fasern, die zu einer ungewebten Textilie angeordnet sind, bestehendes Umhüllungsmaterial bereitgestellt wird, das Umhüllungsmaterial so um den Gegenstand herum angeordnet wird, daß das Umhüllungsmaterial den Gegenstand mit der zweiten Schicht zum Gegenstand hin und der ersten Schicht vom Gegenstand weg bedeckt, das dadurch gekennzeichnet ist, daß die erste Schicht eine schrumpfbare und streckbare Folie ist und die zweite Schicht unterbrochen mit der ersten Schicht verbunden ist.

9. Verfahren nach Anspruch 8, bei dem außerdem so ausreichend Wärme auf das Umhüllungsmaterial angewendet wird, daß die erste Schicht (12) in einem solchen Ausmaß schrumpft, daß die zweite Schicht (14) mit dem Gegenstand in Verbindung kommt und die erste Schicht von dem Gegenstand weghält.

10. Verfahren nach Anspruch 8 oder 9, bei dem außerdem so ausreichend Warme auf das Umhüllungsmaterial angewendet wird, daß die zweite Schicht (14) unter Bildung von Blasen in der zweiten Schicht mit Luft versehen wird.

11. Verfahren nach Anspruch 8 oder 9, das außerdem dadurch gekennzeichnet ist, daß eine Seite der ungewebten Textilie (14) eine durch die Fasern mit erhabenen und abgesenkten Teilen definierte unregelmäßige Oberfläche definiert und daß bei dem Verfahren ferner die unregelmäßige Oberfläche durch Aufbringen von Klebstoff auf die erhabenen Teile an der ersten Schicht (12) befestigt wird.

12. Verfahren nach einem der Ansprüche 8 bis 11, bei dem außerdem ein Material zur chemischen Behandlung zu der ungewebten Textilie (14) zur Regelung der Umgebung, in welcher der Gegenstand gelagert wird, gegeben wird.

13. Verfahren nach einem der Ansprüche 8 bis 11, bei dem außerdem eine Chemikalie, deren Farbe sich durch Lufteinwirkung ändert, auf die ungewebte Textilie (14) aufgebracht wird, wodurch ein Loch in der ersten Schicht (12) durch eine Farbänderung der zweiten Schicht (14) angezeigt wird.

14. Verfahren zur Herstellung von Material zur Schrumpfumhüllung von Gegenständen, bei dem eine Menge einer Schrumpf/Streckfolie (12) bereitgestellt wird, eine Menge einer ungewebten Textilie (14) aus Hohlräume definierenden, zufällig angeordneten Fasern bereitgestellt wird und die Textilie praktisch ohne Zusammendrücken der Textilie an der Folie befestigt wird, wobei die Textilie (14) eine mit der Folie in Verbindung stehende unregelmäßige Oberfläche aufweist, die unregelmäßige Oberfläche durch erhabene und abgesenkte Teile definiert ist und bei dem Verfahren ferner ein Klebstoff ohne Benetzung der Textilie mit dem Klebstoff auf die erhabenen Teile aufgebracht wird.

15. Verfahren nach Anspruch 14, bei dem außerdem die erhabenen Teile der Textilie (14) ohne Zusammenpressen der Folie und der Textilie mit der Folie (12) in Verbindung gebracht werden.

16. Verfahren nach Anspruch 15, bei dem außerdem die Textilseite einer Schicht des Materials gegenüber der Textilseite einer benachbarten Schicht des Materials angeordnet wird und dann das Material mit einer vorbestimmten äußeren Begrenzung unter Bildung eines Beutels, bei dem die Textilie (14) sich auf der Innenseite des Beutels und die Folie (12) sich auf der Außenseite des Beutels befindet, verbunden wird.

## Revendications

1. Matière d'emballage destinée à protéger un article, ladite matière d'emballage comprenant une première couche (12) et une seconde couche (14), une face de la seconde couche étant liée à la première couche par un adhésif, la seconde couche étant une étoffe non tissée, la seconde couche étant destinée à venir en contact avec l'article afin de séparer la première couche de l'article de façon à former un amortissement entre l'article et la première couche, ladite une face de l'étoffe non tissée présentant une surface irrégulière définie par des parties surélevées et abaissées, caractérisée en ce que la première couche est un film rétractable et étirable et l'adhésif est appliqué sur les parties surélevées afin de former des liaisons intermittentes entre les seconde et première couches.

2. Matière d'emballage selon la revendication 1, caractérisée en outre en ce que la seconde couche (14) comprend des fibres disposées de façon aléatoire formant ladite étoffe non tissée.

3. Matière d'emballage selon la revendication 2, caractérisée en outre en ce qu'au moins certaines desdites fibres réfléchissent la chaleur, de manière à protéger l'article de la chaleur appliquée à la première couche (12), et à faciliter la rétraction de la première couche en réfléchissant de la chaleur jusque dans la première couche.

4. Matière d'emballage selon l'une quelconque des revendications 1 à 3, caractérisée en outre en ce qu'un adhésif sensible à la pression est appliqué sur l'autre face de l'étoffe non tissée (14), grâce à quoi l'étoffe non tissée adhère à l'article lors de la pression de la matière d'emballage contre l'article après que la matière d'emballage a été placée autour de l'article, l'étoffe non tissée se trouvant contre l'article.

5. Matière d'emballage selon l'une quelconque des revendications 1 a 3, caractérisée en outre en ce qu'un adhésif thermofusible est appliqué sur l'autre face de l'étoffe non tissée (14), l'adhésif thermofusible étant activé lors d'une application de chaleur à la matière d'emballage, grâce à quoi l'étoffe non tissée adhère à l'article lors d'une application de chaleur à la matière d'emballage après que la matière d'emballage a été placée autour de l'article, l'étoffe non tissée étant contre l'article.

6. Matière d'emballage selon l'une quelconque des revendications précédentes, caractérisée en outre en ce que la première couche est un film rétractable/étirable (12) qui se rétracte sous l'effet d'une chaleur appliquée à celui-ci.

7. Matière d'emballage selon la revendication 5, caractérisée en outre en ce que l'adhésif appliqué sur l'autre face de l'étoffe non tissée (14) est un adhésif activé par la chaleur, qui est activé à une température approximativement identique à celle nécessaire pour faire se rétracter le film (12).

8. Procédé de protection d'un article vis à vis d'un endommagement de surface, le procédé comprenant les étapes consistant à prévoir une matière d'emballage constituée d'une première couche (12) et d'une seconde couche (14) de fibres agencées dans une étoffe non tissée, à disposer la matière d'emballage autour de l'article de façon que la matière d'emballage recouvre l'article, la seconde couche étant contre l'article et la première couche à l'écart de l'article, caractérisé en ce que la première couche est un film rétractable et étirable, et ladite seconde couche est liée de façon intermittente à la première couche.

9. Procédé selon la revendication 8, comprenant en outre l'étape consistant à appliquer à la matière d'emballage une chaleur suffisante pour faire se rétracter la première couche (12) à un point tel que la seconde couche (14) vienne en contact avec l'article et maintienne la première couche à l'écart de l'article.

10. Procédé selon la revendication 8 ou la revendication 9, comprenant en outre l'étape consistant à appliquer à la matière d'emballage une chaleur suffisante pour amener la seconde couche (14) à s'aérer afin de former des bulles dans la seconde couche.

11. Procédé selon la revendication 8 ou la revendication 9, caractérisé en outre en ce qu'une face de l'étoffe non tissée (14) définit une surface irrégulière définie par lesdites fibres comportant des parties surélevées et abaissées, et le procédé comprenant en outre l'étape consistant à fixer ladite surface irrégulière à la première couche (12) en appliquant de l'adhésif sur lesdites parties surélevées.

12. Procédé selon l'une quelconque des revendications 8 à 11, comprenant en outre l'étape consistant à ajouter une matière de traitement chimique à l'étoffe non tissée (14) afin de contrôler l'environnement dans lequel l'article est stocké.

13. Procédé selon l'une quelconque des revendications 8 à 11, comprenant en outre l'étape consistant à appliquer un produit chimique à modification de couleur activée par l'air sur l'étoffe non tissée (14), grâce à quoi une perforation de la première couche (12) est indiquée par un changement de couleur de la seconde couche (14).

14. Procédé de fabrication d'une matière destinée à l'emballage par rétraction d'articles, le procédé comprenant les étapes consistant à prévoir une certaine quantité d'un film rétractable/étirable (12), à prévoir une certaine quantité d'une étoffe non tissée (14) de fibres disposées de façon aléatoire définissant des vides, et à fixer l'étoffe au film pratiquement sans comprimer l'étoffe, l'étoffe (14) comprenant une surface irrégulière venant en contact avec le film, la surface irrégulière étant définie par des parties surélevées et abaissées, et le procédé comprenant en outre l'étape consistant à appliquer un adhésif sur les parties surélevées sans mouiller l'étoffe avec l'adhésif.

15. Procédé selon la revendication 14, comprenant en outre l'étape consistant à amener les parties surélevées de l'étoffe (14) à venir au contact du film (12) sans presser le film et l'étoffe l'un contre l'autre.

16. Procédé selon la revendication 15, comprenant en outre les étapes consistant à placer la face d'étoffe d'une première couche de la matière contre la face d'étoffe d'une couche adjacente de la matière et à réaliser ensuite un scellage le long d'un périmètre choisi de la matière afin de former une enveloppe présentant l'étoffe (14) sur la face interne de l'enveloppe et le film (12) sur la face externe de l'enveloppe.
